# EUROPEAN PATENT APPLICATION

(11) **EP 4 192 198 A1**
(43) Date of publication of application: **07.06.2023**
(21) Application number: 21211836.8
(22) Date of filing: 01.12.2021
(51) Int. Cl.: H05B 47/19, H04W 4/30, H04W 4/80, F21V 23/00, H04L 67/12, H04L 67/125, H04W 84/18, H04W 4/02, H04W 80/02, G01S 19/00, F21V 23/02, F21V 23/04, F21V 23/06, F21W 131/10, F21W 131/103, F21W 131/40, H04L 67/52, H05B 47/10, H05B 47/16, H05B 47/175, H05B 47/20, G08B 5/38

(54) **LIGHTING FIXTURE CONTROLLER AND METHOD FOR FIXTURE MANAGING**

(71) Applicant: BIOT Sp. z o.o., 66-002 Zielona Gora (PL)
(72) Inventor: Lewandowski, Wojciech, 65-124 Zielona Gora (PL)
(74) Representative: Gornicki, Pawel

(57) **Abstract**

The controller for the luminaire includes an IEEE802.15.4 standard compliant short-range wireless communication module (5), a power supply module (2), a real time clock module (3), a control module for power supply control and operation control of a communication module (4), and a luminaire control interface (7), the short-range radio communication module (5) includes a processor (5-1), a memory module (5-2), a radio interface module (5-3) and necessary digital and analog inputs/outputs, and is designed for wireless radio connection to the corresponding modules of other IEEE802.15.4 compliant controllers within radio range. The short-range wireless communication module (5) is connected to the power supply module (2), the calendar clock module (3), the control module for power supply control and operation control of a communication module (4), and the luminaire control interface (7). The real time clock module (3), designed for counting time and autonomous operation of the controller within static and dynamic lighting schedules, contains a supercapacitor (3-1) as a backup power source, while the control module for power supply control and operation control of a communication module (4) has been designed, to interrupt communication between the luminaire and the luminaire control interface module (7), in the event that the short-range wireless communication module (5) or the power module (2) is malfunctioning.

The invention also relates to a method of controlling a luminaire containing a controller according to the invention.

## Description

The subject of an invention is a controller for infrastructural lighting luminaires and method for infrastructural lighting luminaire control, dedicated for remote infrastructural lighting management.

The most important requirements that modern infrastructural lighting networks face are the lowest possible electricity consumption and the possibility of remote supervision of the lighting infrastructure. A desirable feature of modern infrastructural lighting networks is the ability to measure electric power consumed by a specific device - the luminaire for example. Energy installations powering infrastructural lighting often have other energy receivers connected to them, for example, decorative lighting, information, or advertising displays, hence there is a need to measure the energy consumed by the luminaires themselves.

Traditional lighting management systems are based on the astronomical clocks (astroclocks) that switch on the power supply circuits of the luminaires from the level of the lighting cabinet, which results in the luminaire power supply being off during the day and existing power infrastructure cannot be used for other purposes like monitoring and measuring air quality or electric charging stations for "small" electro-mobility - scooters or bicycles. - Therefore, there is a justified need for adapting an energy network dedicated to infrastructural lighting to supply other receivers, rather than suffer costs of additional energy infrastructure. Adaptation of the power grid supplying power to lightning infrastructure, to additionally power other receivers requires that lighting is switched on automatically, from the level of the luminaire.

Automatic switching on and control of lighting from the level of the luminaire can be provided by the luminaire controller, which can be connected to the central management system.

The EP3257333B1 European Patent discloses a luminaire controller configured to control at least one luminaire, it consists of a command module configured to define a minimum of one task to be performed, a status determining module, configured to monitor and recognize the status of at least one task based on data received from the sensor physically separated from the controller; and a control signal controller configured to transmit at least one signal to at least one controllable luminaire, based on data from status definition module.

The US2017/0237471B1 European Patent discloses controller for luminaires that consist of an NFC frontend module connected to an embedded NFC module with shared memory; microprocessor system that is connected to the built-in NFC module and can use NFC's shared memory, which processor (microcomputer) is connected to the luminaire control module. The controller is designed to download or save the configuration and other data to external devices via the NFC frontend module and to use that data to control the luminaire. The controller can be additionally equipped with a wireless communication module as well as a wired communication module.

Traditional infrastructural lighting systems have many disadvantages and require frequent servicing however they are quite resistant to atmospheric discharges, power surges in power grids, and other conditions causing accidental damage to sensitive electronic devices.

When integrating the control system into the lighting infrastructure it is important not only to take care of the reliability of devices that will take control of the lighting infrastructure but also to ensure road traffic safety in the area of the lighting infrastructure system operation. Reliable functioning of lighting infrastructure has to be also ensured in the event of a control system failure.

The controller for the luminaire, according to the invention, includes a short-range wireless communication module compliant with the IEEE802.15.4 standard, a power supply module, a real time clock module, a control module for power supply and operation control of a communication module, and a luminaire control interface, whereby the short-range radio communication module, compliant with the IEEE802.15.4 standard, includes a processor module, memory module, radio interface module and the necessary digital and analog input/output, and is designed for wireless radio connection with corresponding short-range communication modules of other controllers, installed within the radio range and equipped with a radio interface, compliant with the IEEE802.15.4 standard for data transmission in a wireless network. The short-range wireless communication module is connected to a power supply module, a real time clock module, a control module for power supply and operation control of a communication module, and a luminaire control interface. The real time clock module designed for counting time and autonomous operation of the controller within static and dynamic lighting schedules, contains a supercapacitor as a backup power source, whereas the control module for power supply control and operation control of a communication module, is designed to interrupt communication between the luminaire and the luminaire control interface module if the short-range wireless communication module or the power module is not working properly.

Preferably, the short-range radio communication module, compliant with the IEEE802.15.4 standard, uses the Open Thread protocol for data transmission over the wireless network.

Preferably, the communication interface with the luminaire is a DALI digital control system.

Preferably, the communication interface with the luminaire is in the analog standard 1-10 V.

Preferably, the controller for the luminaire includes a universal interface for communication with the luminaire, compliant with the DALI digital standard and the analog 1-10 V standard, which the module is configured to operate in one of the indicated operating modes, programmatically automatic or manual.

Preferably, the controller includes a luminaire switching module, connected to the power supply module and a short-range radio communication module, wherein the luminaire switching module is designed to monitor voltage waveform and to switch on the luminaire power supply when the voltage is close to zero.

Preferably, the luminaire switching module includes a module for reducing the surge current of the luminaire by means of the equivalent series resistance integrated into the luminaire switching circuit.

Preferably, the controller includes a module for measuring electrical parameters of the luminaire power supply, connected to the power supply module and a short-range radio communication module, which module for measuring electrical parameters of the luminaire power supply is designed to measure parameters such as active power, reactive power, apparent power, active energy, reactive energy, apparent energy, voltage, current, frequency, with an error being less than one percent of the relevant parameter's full measuring scale, and the processing and use of measurement data to report warning alerts or error in the operation of the luminaire.

Preferably, the short-range radio communication module has a connected GPS module designed to synchronize a real time clock module based on the retrieved standard time, as well as using the retrieved location of the controller to send information about the location or change of the location of the controller via the radio communication module to the management system.

Preferably, the controller for the luminaire includes an external illuminance measurement module connected to a short-range radio communication module and a power supply module, designed to measure the illuminance value and to provide information on the illuminance value for short-range radio communication.

Preferably, the radio communication module of the controller is designed to modify the controlling of the luminaire based on the information about the value of the illuminance.

Preferably, the controller for the luminaire includes a long-range communication module connected to the power supply module and the short-range communication module, and it is designed to communicate with the management system.

Preferably, the controller for the luminaire includes a long-range communication module connected to the power supply module and the short-range communication module, and it is designed to communicate with the management system, which long-range communication module is equipped with a GPS module.

Preferably, the controller for the luminaire is manufactured as a built-in device for the luminaire.

Preferably, the controller for the luminaire is made as a standalone device installed in a standard NEMA socket.

Preferably, the controller for the luminaire is made as a standalone device installed in a standard Zhaga socket.

The main element of the controller that manages its functioning is the short-range radio communication module. Connecting the luminaire controller to the gateway designed to interconnect (connect) the local short-range radio network with the central management system CMS of infrastructure lighting via a long-range wireless communication network allows for remote operation of the controllers, and through them, the luminaires in the scope including switching off, changing the operating schedule, and reading errors reported by the controller of the luminaire. The real time clock module keeps track of real time and stores the real time value, it also allows to correct the time to the standard time. The short-range radio communication module, based on the received time and location, can calculate the sunrise and sunset times, and based on that can implement the lighting schedules stored in its memory, additionally without access to the global network and CMS. That makes it possible for the infrastructural lighting system to also work in emergencies like a failure of the local radio communication network, communication between servers via a long-range network, or in the event of server downtime. Given that the real time clock module is equipped with a supercapacitor as a backup power supply, in the event of the luminaire power outage, the clock can be maintained up to 15 days, in the full range of controller operating temperatures, which is not less than the operating range of the luminaire.

In addition, the supercapacitor does not require replacement during the operation of the controller.

The module that controls the communication module and the power supply parameters ensures the lighting of the luminaire, additionally in the event of the radio communication module malfunctioning or incorrect power supply parameters. The module that controls the communication module and the power supply parameters, in in event of detecting any irregularities in the functioning of one of the controlled systems, switches off communication with the luminaire. As a result, the luminaire is functioning as if it does not contain a controller, thus it guarantees lighting at night, as well as easy identification of the damage during the day, given that the power in the electrical network supplying the luminaire is not turned off during the day.

The method of controlling a luminaire containing a controller according to the invention, is that the control module of the controller, after detecting a malfunction of the short-range communication module or the power supply module, disables communication between the controller and the luminaire in the way that, the luminaire power supply module interprets this state as the lack of the controller, thus it lights at full available power, moreover the controller interprets and sends a "life signal" within defined time interval, preferably not more than 3 minutes, which signal is sent to and interpreted by other controllers of the associated mesh network, but also by management system (CMS), however the lack of a "life signal" from the associated controller causes a defined control of the luminaire managed by the controller, whereas the controller's short-range radio communication module retrieves the standard time from its own mesh network and after calculating the adjustments related to transmission time of sending time data, synchronizes the controller's real time clock, that provides clock time to calculate the solar time, whereas times - clock and solar - are used by the processor of the short-range communication module to select the appropriate operating schedule from the schedules stored in the memory of the short-range radio communication module along with priority, based on those it independently controls the luminaire for a long period of time, with distinction between weekdays, weekends, and exceptions to the operation mode on certain days, as well as synchronously with other controllers of the same mesh network.

Preferably, the controller, after switching on, blinks the luminaire once, signaling to the installer that the controller has been properly installed in the luminaire.

Preferably, a controller equipped with a GPS module takes the standard time from the GPS and distributes it in an associated mesh network, serving as the standard time controller, so that only one such device is needed for the network.

Preferably, the controller uses data from the connected or integrated ambient light intensity sensor and from sensors of other related controllers in the mesh network, to statistically analyze the results of the measurement of outdoor illuminance and, based on this analysis, rejects the results with a gross error, before selecting the connected luminaire's operating schedule.

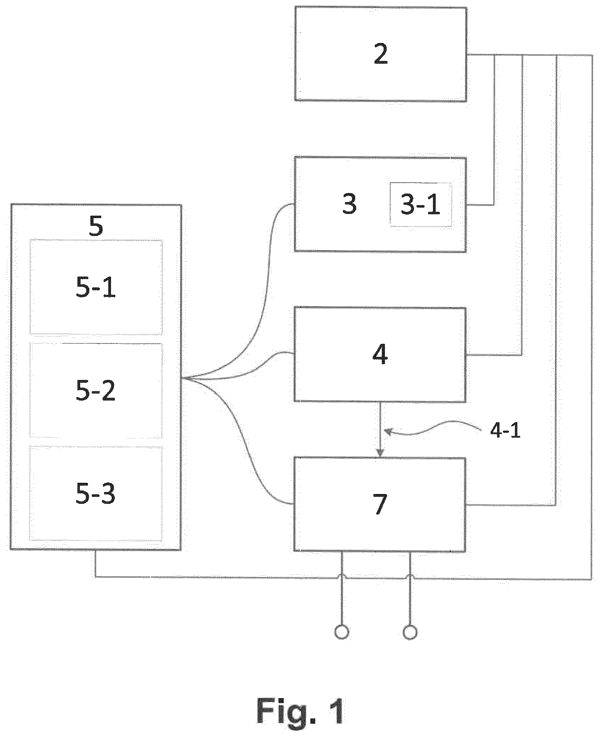

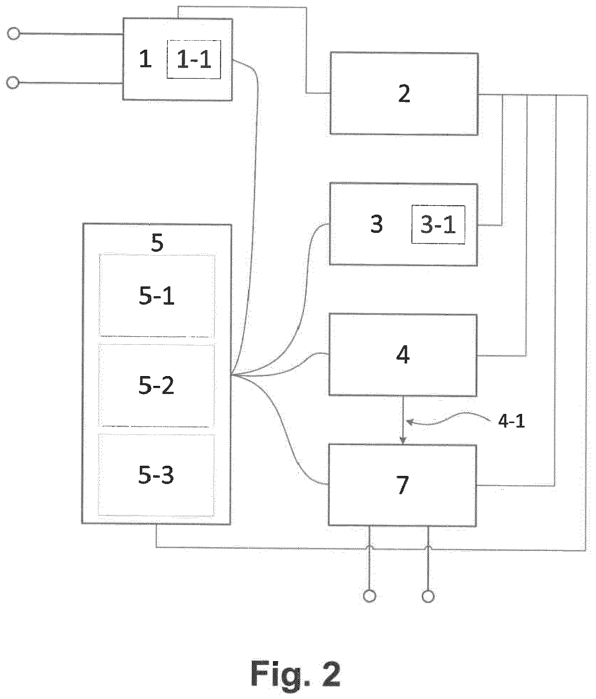

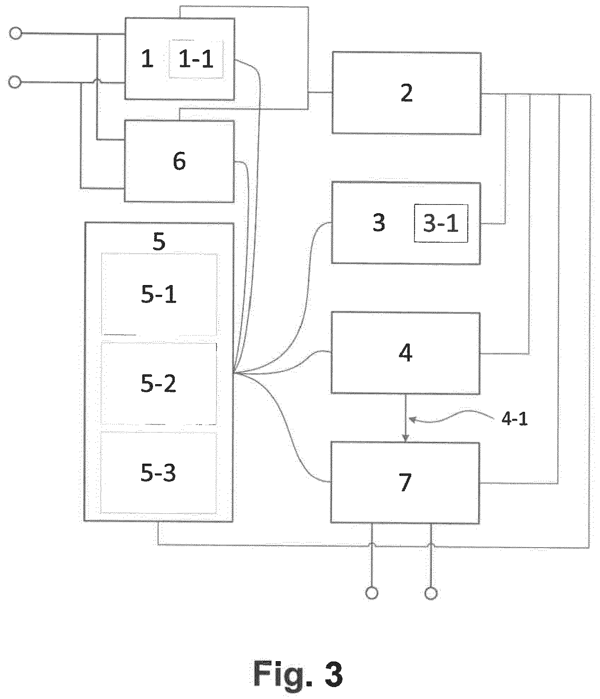

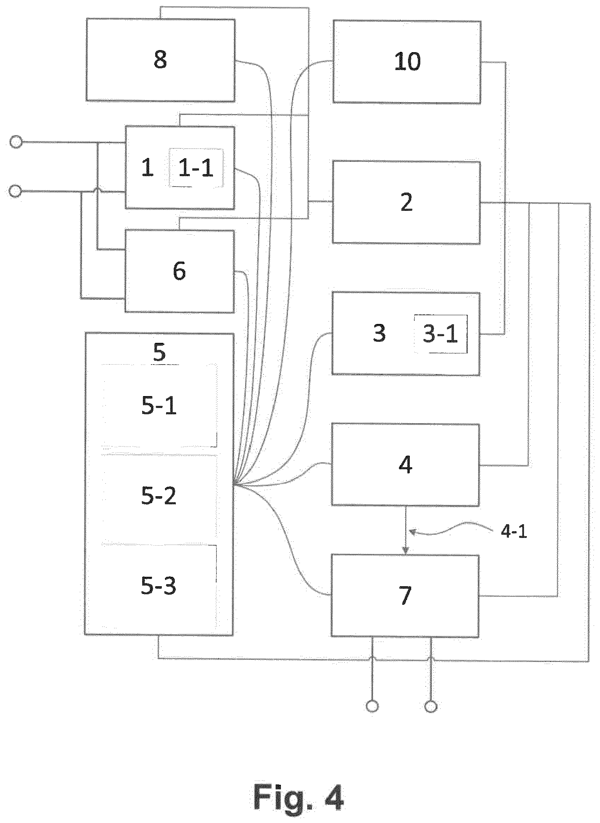

The subject of the invention is explained in more detail based on the embodiments shown in the drawing, in which fig.1 shows a block diagram of a controller for a luminaire, fig. 2 shows a block diagram of a controller, including a switching module 1 of a luminaire, fig. 3 shows block diagram of a module for power parameters measurements, fig. 4 shows a block diagram of a controller equipped with a GPS module and an ambient light intensity measurement module, fig. 5 shows a block diagram of a controller, including a long-range communication module with a built-in GPS module, and fig. 6 shows a block diagram illustrating the method of controlling the luminaire.

The main element of the controller that manages its operation is a short-range radio communication module 5 containing a processor module 5-1, a memory module 5-2, a radio interface module 5-3, and the necessary digital and analog inputs/outputs. The short-range wireless communication module 5 complies with the IEEE802.15.4 standard and uses the Open Thread protocol for data transmission over the wireless network. The short-range radio communication module 5 is connected to the power module 2, the real time clock module 3, the power and operation control module of the communication module 4, and the communication interface with the luminaire in the DALI standard 7.

The connection of the real time clock module 3 with the short-range radio communication module 5 enables the time to be read from the real time clock and the standard time to be saved to the real time clock in case of time synchronization.

The power supply circuit of the clock module includes a supercapacitor 3-1 as a backup power source to ensure that the timing is maintained in the event of power outages to the controller, for example, caused by a failure of a fuse in a lamp pole or in a lighting cabinet. The use of a 3-1 supercapacitor has the advantage that it does not need to be replaced during the operation of the device, unlike the battery used as a backup power source, and it works correctly in a very wide temperature range, for example from -30 to +60 degrees C.

The interface module for communication with the luminaire 7 is designed to communicate with the power supply of the luminaire compliant with the DALI or 1-10V standard, both to manage the status of the luminaire and to read the status of the luminaire's power supply.

The control module 4 is connected to the short-range communication module 5, the DALI communication interface 7, and the power supply module.

2. The control module 4 is designed to check the correct operation of the power module 2, as well as to check the correct operation of the short-range radio communication module 5. If a malfunction of the power supply module 2 or the short-range radio communication module 5 is detected, the control module 4 interrupts communication of the luminaire with the Dali 7 communication interface module, via the 4-1 control connection. The result of this interruption is forcing the autonomic operation of the power supply module of the luminaire as if it did not contain the controller. This ensures the correct functioning of the lighting, and therefore road traffic safety in the event of errors in the functioning of the controller.

The controller can be additionally equipped with a switching module for 1 luminaire, which is connected to the power module 2, and a short-range radio communication module 5. The switching module for 1 luminaire has been designed to monitor the supply voltage in order to switch on the luminaire as close as possible to the zero voltage value, taking into account all electrical and mechanical delays occurring in the circuitry. The switching module of the luminaire 1 includes a module for reducing the surge of the switching current 1-1 of the luminaire. The switching current surge reduction module 1-1 introduces an equivalent series resistance to the switching circuit which limits the inrush current and is reduced after the luminaire is switched on.

The controller can also be equipped with a module for measuring the power supply parameters 6 of the luminaire. The power supply parameter measurement module 6 is connected to the power supply module 2 and the short-range radio communication module 5 and has been designed to measure the electrical parameters of the luminaire's supply, such as active power, reactive power, apparent power, active energy, reactive energy, apparent energy, voltage, current, frequency, with an error not exceeding 1 percent of the full measurement scale of a given parameter and the processing and use of measurement data to report warning alerts or errors in the operation of the luminaire.

The controller can also be equipped with a GPS module 8, and an ambient light intensity measurement module 10. The GPS module 8 is connected to a power module 2 and a short-range radio communication module 5; designed to retrieve a standard time to synchronize the real time clock, and to determine the location of the controller. The controller location data is intended for use by the CMS central management system. The controller sends its location data via the short-range radio communication module. The illuminance measurement module 10 is connected to the short-range radio communication module 5 and the power supply module 2 and is designed to measure the value of the ambient light intensity, the value of which is used by the short-range radio communication module 5 to modify the schedules executed.

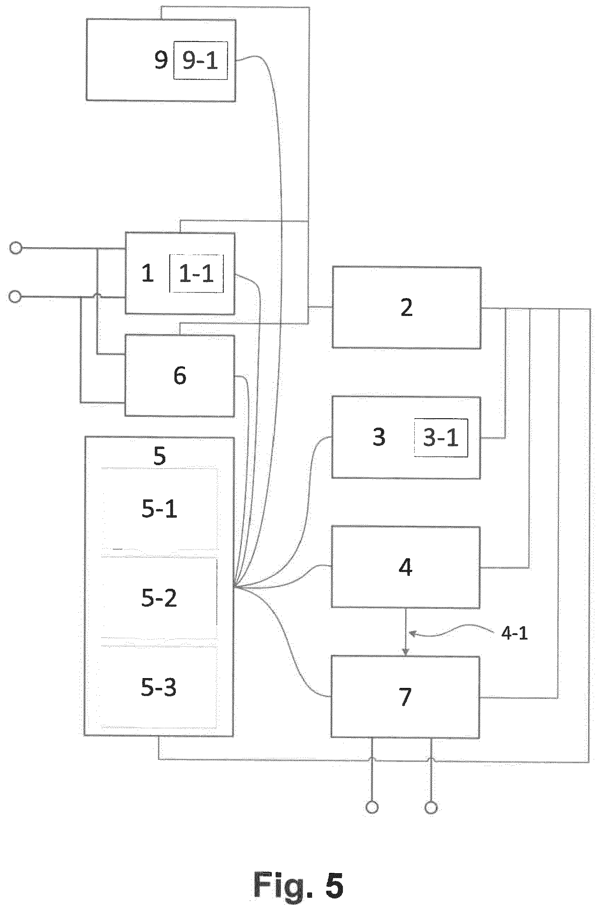

Fig. 5 shows the controller additionally including a long-range communication module 9, with a built-in GPS module 9-1. The long-range communication module 9 is connected to the power supply module. 2 and the short-range radio communication module 5. The long-range communication module 9 communicates directly with the central management system CMS using the subscriber network, as well as thanks to the triangulation of the mobile base stations (BTS) increases the accuracy of the location received from the GPS module to a value below 3 m.

A particular advantage of the controller according to the invention is the use of a short-range radio communication module 5, which is equipped with a processor module 5-1 and a memory 5-2, sufficient to manage all the functionalities of the controller. Therefore, the functional features of the controller can be easily modified, without the need to design the radio system, which reduces the costs and the risk of electromagnetic compatibility (EMC) test failure, and for each new device, consequently lowering the cost of making new devices and reducing the price of the device for the customer.

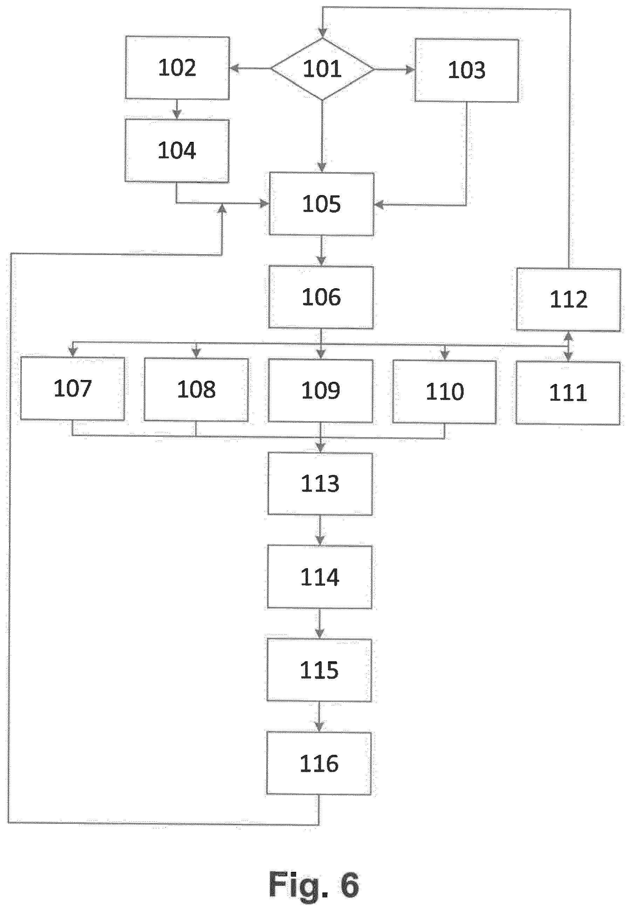

The method of controlling the luminaire carried out by the controller results from the organization of the software embedded in the controller and the impact of the environment on the decisions made by the controller. The most important internal parameter of the control is the date and real time, while the environment affects the controller mainly through the associated mesh network. The operation of the controller is illustrated in the block diagram in Fig. 6 and includes the following steps:

### STEP 101.

After starting, the controller checks the saved configuration. If it is a factory configuration, which means that it is the first start-up, then the controller switches on and off the connected luminaire once. It is a signal for the installer that the controller is correctly electrically connected with the luminaire and is working properly. Then the controller equipped with the GPS module starts the process of acquiring time, wherein the process of acquiring time takes place in the background due to the relatively long time required to achieve the expected accuracy. In step 102, the controller begins searching for an active mesh network connected to the central management system of the CMS. If the configuration indicates a user configuration, the controller will check the date and real time. If the date 1 January 1970 is indicated, it means that the time synchronization has been lost - the controller will switch on the connected luminaire at 100% and go to step 103. If, after switching on, the controller recognizes the correct time, meaning the client configuration is present, it will verify the schedules saved in the memory and proceed to the standard activity starting with step 105.

### STEP 102

The controller searches for the mesh radio network, joins the found network, and proceeds to step 104.

### STEP 103

The controller searches for known devices in the range of the radio network, joins the found mesh network, synchronizes the real time clock, and proceeds to step 105.

### STEP 104

The controller downloads the configuration data specific to the location of the controller installation, saves the network data, synchronizes the real time clock, downloads the defined lighting schedules, and goes to step 105.

### STEP 105

The controller verifies the real time from the time clock module, based on which the controller calculates the solar time using the controller's location data. Then, the controller checks if any schedule is assigned for the current time, if so, the lighting intensity value appropriate for the current time point is verified, then the controller sets the correct lighting intensity value and verifies that the command has been carried out correctly. If so - the controller goes to step 106, if not - the controller sends an error message to the CMS, then it also goes to step 106.

### STEP 106.

The controller checks the data from the mesh network. If the sent data is not properly encrypted, it will be ignored, if it is correctly encrypted, the controller checks whether it is the target recipient of the data, or whether it should only forward it. If the data is to be sent, the controller sends the received data packet, and if the data is sent to the controller, they are decrypted and constitute the basis for further operation.

Depending on the type of data received, listed below:
1. Command to change the state of the connected luminaire,
2. Inquiry about the status of the controller and luminaire,
3. "Life signals" from other controllers, which may include controllers with a connected light sensor,
4. Data from light sensors in the vicinity of the controller,
5. Data on the readiness to update the software for download,
6. Data containing new configurations,
the controller proceeds to handle the received data, according to the type, in steps: 107, 108, 109, 110, 111, or 112.

### STEP 107 - responsible for the state change command

The controller reads the desired state and the time for which the desired state is to be forced and then issues a command to the luminaire and after a short delay resulting from the luminaire's response time, the controller verifies if the command execution was correct. If the command has been carried out correctly and the luminaire has confirmed the command, the controller proceeds to the next STEP 113. If the luminaire did not execute the command correctly, the controller makes another attempt, two to five attempts. If the command is not correctly executed, the controller prepares an appropriate error message and sends it to the CMS, and then proceeds to STEP 113.

STEP 108 - responsible for handling inquiries about the status of the controller and the luminaire The controller prepares the collected data and sends it to the CMS system, then proceeds to STEP 113.

### STEP 109

The controller working in the adaptive-lighting mode, after receiving the "life signal" from other controllers - forwards it in the mesh network, if it does not work in on-demand lighting mode - it ignores received signals. The controller working in the on-demand lighting mode checks if it has a reaction assigned to the signal from the controller from which the signal has been received. If so, it stores this information in the memory to check if it is receiving the "Life signals" at the required rate, then goes to step 113.

### STEP 110 - responsible for the operation of lighting sensors

The controller receives and stores the illuminance value information received from sensors associated with the controller via the mesh network, and then proceeds to step 113.

### STEP 111 - responsible for handling commands for dynamically adaptive on-demand lighting,

After receiving and decoding the command from the associated light sensor, the controller verifies the time stamp of the sensor activation and the current internal time. After the reaction time to the set sensor, defined in the controller configuration, has elapsed, it switches the luminaire from the idle state to the active state, following the parameters set in the set configuration. If the command came from a sensor not related to the controller, the controller checks if the command should be forwarded on the network, and then goes to step 113.

### STEP 112 - responsible for handling software updates.

The controller downloads new software and saves it in a designated memory area, checking that the software is correctly authenticated and that the data downloaded as part of the update does not contain errors. After completing the full software image, the controller switches to the new version of the software, which is related to the system restart, so it goes to step 101. The update download process may be interrupted by other more urgent tasks at the time, because downloading updates may take quite a long time.

### STEP 113

The controller checks the time that has passed since the last "life signal" was sent, if as a result of this check it finds that the life signal has been sent recently and can perform this operation in the next iteration, it goes to the next 114 STEP, if the time for sending the life signal is correct, that signal is sent by the controller which goes to STEP 114.

### STEP 114

The controller checks if it is in the on-demand lighting mode and if this mode is currently active. If not - goes to the next step, if so - checks the status of the luminaire. If the luminaire is in the idle state - it goes to the next step, if the luminaire is active - the controller checks how much time has passed since the last lighting command of the luminaire and whether the required lighting time has elapsed. If the required lighting time has elapsed - the luminaire is dimmed, and if it should be lit - the controller goes to step 115.

### STEP 115

The controller checks the condition of the light sensor, compares the read value with the preset values in the memory, and checks whether it has received measurement data from the ambient light sensors and whether it is to react to the measurement data from the sensors. If so - the controller compares the data from its own sensor with the received data, based on that, it determines whether the data is statistically comparable, whether there are significant variations in them, which may result, for example, from an accidental covering of one of the sensors, and then introduces corrections - if those are required in the lighting schedule of the luminaire. In addition, it sends measurement data from its own light sensor to the controllers in the mesh network so that other controllers can perform the same data analysis and rely on statistical data from at least several sensors when switching on the luminaire, and then proceeds to step 116.

### STEP 116

The controller collects all status data from the luminaire and measurement data from the power supply parameter measurement module and sends those in a defined time interval to the CMS. After this step is complete, the controller returns to STEP 105.

## Claims

1. Luminaire controller including power supply unit, a short-range wireless communication module, a luminaire control interface, wherein it includes a short-range wireless communication module (5) compliant with the IEEE802.15.4 standard, a power supply module (2), a real time clock module (3), a control module for power supply parameters control and operation control of a communication module (4), and the luminaire control interface (7), whereby the short-range radio communication module (5) compliant with the IEEE802.15.4 standard includes a processor module (5-1), memory module (5-2), radio interface module (5-3) and the necessary digital and analog input/output and is designed for wireless radio connection with the corresponding short-range communication modules of other controllers installed within radio range and equipped with a radio interface compliant with the IEEE802.15.4 standard for data transmission in a wireless network, whereas the short-range wireless communication module (5) is connected to power supply module (2), the real time clock module (3), the control module for power supply parameters control and operation control of a communication module (4) and the luminaire control interface (7), whereby the real time clock module (3), designed to calculate the time and autonomous work of the controller within static and dynamic light schedule operations, contains a supercapacitor (3-1) as a backup power source, while the control module for power supply control and operation control of a communication module (4) is designed to interrupt communication between the luminaire and the luminaire control interface module (7) in the event of that the short-range radio communication module (5) or the power supply module (2) is malfunctioning.

2. The controller of claim 1, wherein the short-range radio communication module (5), compliant with the IEEE802.15.4 standard, uses the Open Thread protocol for data transmission in the wireless network.

3. The controller of claim 1, wherein the interface for communication with the luminaire (7) is a DALI digital control system.

4. The controller of claim 1, wherein the interface for communication with the luminaire (7) is in the analog standard 1-10V.

5. The controller of claim 1, wherein it contains a universal interface for communication with the luminaire (7), compliant with the DALI digital standard and the analog 1-10V standard, which module is configured to work in one of the indicated modes, programmatically automatic or manual.

6. The controller of claim 1, wherein it contains a luminaire switching module (1) connected to a power supply module (2) and a short-range radio communication module (5), which luminaire switching module (1) is designed to monitor voltage waveform and to switch on the luminaire power supply when the voltage is close to zero.

7. The controller of claim 1 and claim 6, wherein the luminaire switching module (1) contains a module reducing the surge of the switching current (1-1) of the luminaire by means of the equivalent series resistance integrated into the luminaire switching circuit.

8. The controller of claim 1, wherein it contains a module for measuring electrical parameters of the power supply of the luminaire (6), connected to the power supply module (2), and the short-range radio communication module (5), which module for measuring electrical parameters of the luminaire power supply (6) is designed to measure parameters such as active power, reactive power, apparent power, active energy, reactive energy, apparent energy, voltage, current, frequency, with an error being less than one percent of the relevant parameter's full measuring scale, and the processing and use of measurement data to report warning alerts or error in the operation of the luminaire.

9. The controller of claim 1, wherein to the short-range radio communication module there is connected a GPS module (8) which is designed to retrieve a standard time in order to synchronize a real time clock and retrieve the location of the controller and to transmit information about the location or change of the location of the controller via the radio communication module to the management system.

10. The controller of claim 1, wherein it contains an external illuminance measurement module (10) connected to a short-range radio communication module (5) and a power supply module (2), designed to measure the illuminance value and to transmit information about the illuminance value to the short-range communication module (5).

11. The controller of claim 1, wherein the controller short-range wireless communication module (5) is designed to modify the controlling the luminaire based on the illuminance value information.

12. The controller of claim 1, wherein it contains a long-range communication module (9), connected to the power supply module (2) and a short-range radio communication module (5), and designed to communicate with a management system.

13. The controller of claim 1, wherein it contains a long-range communication module (9) connected to the power supply module (2) and a short-range radio communication module (5), and designed to communicate with a management system, which long-range communication module is equipped with a GPS module (9-1).

14. The controller of claim 1, wherein it is manufactured as a built-in device in a luminaire.

15. The controller according to claim 1, wherein it is made as an independent device mounted in a standard NEMA connector.

16. The controller of claim 1, wherein it is made as an independent device mounted in a standard Zhaga connector.

17. A method of controlling a luminaire containing a controller according to the invention, wherein the control module (4) of the controller, in the event of detecting a malfunction of the short-range communication module (5) or the power supply module (2), disables communication between the controller and the luminaire in such a way that the power supply module of the luminaire interprets this state as the lack of a controller and therefore lights with full available power, and the controller interprets and also sends a "life signal" in a defined time interval, moreover, preferably not more than 3 minutes, which signal is transmitted and interpreted by the other controllers in the associated mesh network, as well as by the supervisory system (CMS), the lack of a "life signal" from the associated controller triggers a defined control pattern of the luminaire managed by the controller, and the short-range radio communication module (5) of the controller triggers defined control of the luminaire managed by the controller, in addition, a short-range radio communication module (5) through participating in the mesh network acquires the reference time from its own mesh network and after calculating the corrections related to the time of transmitting time data, it synchronizes the calendar time clock (3) of the controller, which is used to calculate the solar time, and the times - clock and solar are used by the processor (5-1) of the short-range communication module (5) to select the appropriate operating schedule from among the schedules stored in the memory (5-2) with priority, and on their basis, it independently controls the luminaire for a long time, distinguishing between weekdays, weekends, and exceptions to the mode of operation on certain days, as well as synchronously with other controllers of the same mesh network.

18. The method of claim 17, wherein after switching on, the controller blinks the luminaire once, signaling to the installer that the controller has been properly installed to the luminaire.

19. The method of claim 17, wherein the controller equipped with the GPS module (8) or (9-1) takes a reference time from the GPS and distributes it in the associated mesh network, serving in the associated mesh network as the reference time controller.

20. The method of claim 17, wherein the controller uses data from the connected or integrated illuminance sensor (10) and from sensors, other controllers associated with it in the mesh network, for a statistical analysis of the results of the measurement of the external light intensity, and on the basis of this analysis it rejects the results with a gross error before selecting the operating schedule for the connected luminaire.
